# EUROPÄISCHE PATENTSCHRIFT

(11) **EP 0 543 771 B1**
(45) Veröffentlichungstag und Bekanntmachung des Hinweises auf die Patenterteilung: **05.03.1997**
(21) Anmeldenummer: 92810729.1
(22) Anmeldetag: 25.09.1992
(51) Int. Cl.: B29C 69/00, B26D 1/547, B26D 1/46

(54) **Schneidvorrichtung für eine Extrusionsanlage**
Cutting device for extruder
Dispositif de coupe, pour une extrudeuse

(30) Priorität: 20.11.1991 CH 3395/91
(43) Veröffentlichungstag der Anmeldung: 26.05.1993
(73) Patentinhaber: Sulzer Chemtech AG, CH-8404 Winterthur (CH)
(72) Erfinder: Bachmann, Eugene, CH-8472 Ohringen (CH); Jürgen, Luder, Dr., CH-8053 Zürich (CH); Stringaro, Jean-Paul, Dr., CH-8180 Bülach (CH)
(74) Vertreter: Heubeck, Bernhard

(56) Entgegenhaltungen:
- EP-A- 0 202 010
- EP-A- 0 265 628
- WO-A-91/04141
- GB-A- 2 206 521
- NL-A- 6 501 749

## Beschreibung

Die Erfindung bezieht sich auf eine Schneidvorrichtung für eine Extrusionsanlage. Die kontinuierlich aus dem Mundstück einer Extrusionsanlage oder aus einer Strangpressanlage austretenden Extrudate, welche z.B. aus Keramik oder Kunststoffmassen bestehen, müssen auf irgendeine Weise in Stücke zerlegt, verfestigt und in eine Endform gebracht werden. Vor allem schwierig zu behandelnde keramische Hohlkörper-Extrudate mit relativ dünnen Wänden und sehr geringer mechanischer Festigkeit müssen normalerweise mit Längenzugabe von Hand grob geschnitten und anschliessend durch Trocknung oder Brennen mechanisch verfestigt werden, bevor sie in ihre Endform gebracht werden können. Dies geschieht z.B. durch Sägen und Schleifen in aufwendiger Nachbearbeitung. Es entstehen Materialverluste und Abfall und der dabei anfallende gesundheitsschädliche Schleifstaub erfordert zusätzliche Investitionen in Form einer Staubkammer.

Aus der EP-A 0 202 010 ist eine Schneidvorrichtung bekannt, mit der ein Extrudat in Stücke geschnitten werden kann. Die Schnitte werden mit einem Schneiddraht auf einer bewegbaren Halterung hergestellt. Die Halterung wird parallel zu dem aus der Extrusionsanlage austretenden Produkt mitbewegt. Um einen sauberen Schnitt zu erhalten, muss der Draht extrem dünn sein. Es werden Massnahmen vorgeschlagen, mittels derer Drahtbrüche vermeidbar sind.

Es ist daher Aufgabe der vorliegenden Erfindung, die Nachteile dieser bisherigen Verfahren zu überwinden und eine Schneidvorrichtung zu schaffen, die einen sauberen unverschmierten Schnitt ohne Deformation des Extrudats möglich macht und dabei die bisher notwendige Nachbearbeitung weitestgehend vermeidet. Ueberdies sollen auch sehr schwierig zu behandelnde Hohlkörper-Extrudate mit ganz dünnen Wänden, welche auch Faserzusätze enthalten können, sehr genau und in dünnen Scheiben geschnitten werden können.

Diese Aufgabe wird erfindungsgemäss gelöst durch eine Schneidvorrichtung nach Anspruch 1. Der gespannte, relativ dünne Schneiddraht wird von der bewegbaren Halterung rasch durch das Extrudat hindurchgezogen und zwar so, dass die beiden Geschwindigkeitskomponenten in axialer und in orthogonaler Richtung so gross sind, dass das Extrudat infolge seiner Massenträgheit quasi an Ort bleibt während der dünne Draht sehr rasch einen dünnen Schnitt durch das Extrudat hindurch erzeugt, ohne Deformation seiner Struktur. Die abhängigen Ansprüche betreffen vorteilhafte Weiterbildungen der Erfindung. Dabei kann der Draht in einem sehr geringen Abstand von z.B. höchstens 2 mm von der Extrusionsmundstückfläche geführt sein, so dass das Extrusionsmundstück die Stabilität des austretenden Extrudats beim Schneiden noch unterstützen hilft. Der Draht kann aus hochfestem Material bestehen, wie aus Stahl, Aramid, Glasfasern oder LC-Polymeren. Um einen dünnen Schnitt mit geringen Deformationskräften zu erreichen, kann der Draht eine Dicke von vorzugsweise 0.05 mm bis 0.5 mm aufweisen und mit mindestens 500 N/mm² gespannt sein. Die Geschwindigkeitskomponenten V1 und/oder V2 liegen beim Schneiden vorzugsweise zwischen mindestens 2 und 30 m/sec, wobei die orthogonale Geschwindigkeitskomponente V2 mindestens 50 mal grösser ist als die Extrusionsgeschwindigkeit V3 und wobei das Verhältnis der Geschwindigkeitskomponenten V1/V2, mindestens im ersten und im letzten Drittel des Schnittes, zwischen 0.2 und 5 liegt. Besonders geringe Deformationskräfte können weiter erreicht werden, wenn der Schneiddraht das Extrudat bei Beginn des Schneidens punktförmig berührt und wenn er einen spitzen Winkel zu den Wänden eines Hohlkörper-Extrudats aufweist. Der Schneiddraht kann eine geschlossene, in der Halterung umlaufende Schlaufe bilden, welche zudem leicht durch eine zugeordnete Abwischvorrichtung laufend von allfällig anhaftenden Extrudatresten befreit werden kann. Eine einfache Schneidvorrichtung kann mit Drehhebeln realisiert werden, welche den Draht elastisch eingespannt auf einem Kreisbogen führen. Eine Halterung mit Linearführungen kann sehr nahe beidseits des Extrudats angebracht sein und damit eine möglichst geringe freie Drahtlänge ermöglichen und sie kann auch mit einer konstant hohen Schneidgeschwindigkeit betrieben sein. Durch Förderbänder kann das Extrudat während des ganzen Schneidvorgangs kontinuierlich vorgeschoben und allseitig gehalten sein. Eine zugeordnete nachgeschaltete Transportvorrichtung für die abgeschnittenen Extrudatkörper mit einem bewegbaren Tisch und einer Abnahmeschale ermöglicht auf einfache und schonende Art das Wegbringen der geschnittenen Extrudat-Körper und damit einen raschen kontinuierlichen Betrieb der Anlage. Eine zugeordnete Steuereinrichtung kann die Antriebe von Extrusionsanlage, Schneidvorrichtung, Förderbändern und Transportvorrichtung koordinieren und damit einen optimalen Betrieb der ganzen Anlage ermöglichen.

Die Erfindung wird im folgenden anhand von Beispielen und Figuren weiter erläutert. Dabei zeigen:
- Fig. 1a, b: Ein Beispiel einer erfindungsgemässen Schneidvorrichtung in zwei Ansichten mit zwei Drehhebeln als Halterung des Schneiddrahtes;
- Fig. 2a, b: ein Beispiel mit Halbkreishebeln;
- Fig. 3, 4, 5: Beispiele mit Linearantrieben der Schneiddrahthalterung;
- Fig. 6a, b, c: den zeitlichen Verlauf der Drahtgeschwindigkeiten V1, V2 bei verschiedenen Ausführungsbeispielen;
- Fig. 7: die relative Lage von Schneiddraht und Wänden eines Hohlkörper-Extrudats;
- Fig. 8a, b: eine Schneidvorrichtung mit zugeordneter Transportvorrichtung und deren Funktion im zeitlichen Ablauf.

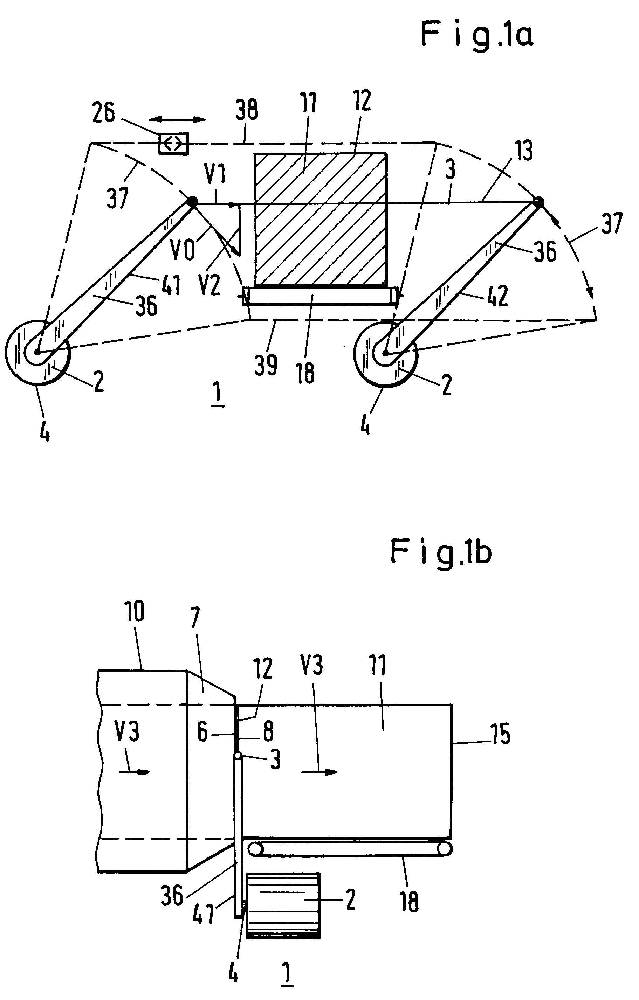

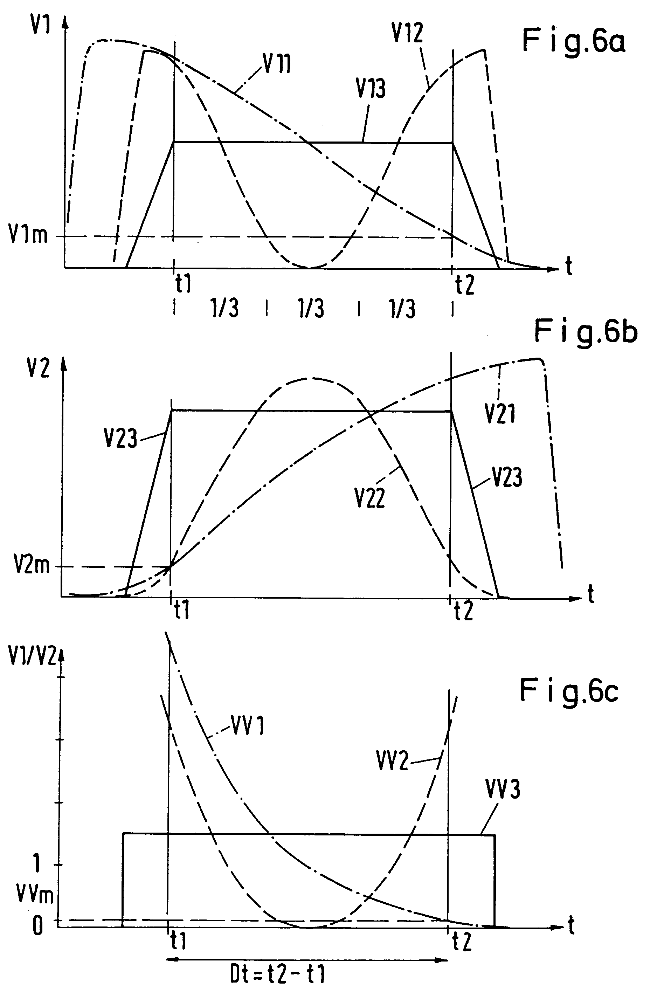

Fig. 1a, b zeigt eine erfindungsgemässe Schneidvorrichtung 1 in Front- und Seitenansicht. Aus einer Extrusionsanlage 10 tritt das Extrudat 11 mit Extrudiergeschwindigkeit V3 aus und wird vom Förderband 18 kontinuierlich weiterbewegt und gehalten. In unmittelbarer Nähe von z.B. wenigen Millimetern, oder sogar weniger als 1 mm, der Ausgangsfläche 6 des Extrusionsmundstücks 7 liegt die Schneidfläche 8, welche ein Schneiddraht 3 durchläuft. Der Schneiddraht ist auf einer bewegbaren Halterung 4 gehalten und geführt. Die Halterung besteht aus zwei Drehhebeln 41, 42 beidseits des Extrudats 11, mit denen die Querschnittsfläche 12 durch den Draht 3 überstreichbar ist. Ausgehend von einer oberen Ausgangslage 38 wird der Draht 3 auf einem Kreisbogen 37 bis zur unteren Endlage 39 geführt. Der Draht ist z.B. am ersten Hebel 41 fixiert und wird vom zweiten Hebel 42 elastisch gespannt. Die Hebel werden hier von zwei Antrieben 2 z.B. von hochdynamischen Synchronmotoren synchron bewegt. Beim raschen Durchschneiden des Extrudats 11 wird der Draht mit der resultierenden Geschwindigkeit V0 (tangential zum Kreisbogen 37) bewegt, welche sich zusammensetzt aus einer axialen V1 und einer orthogonalen Geschwindigkeitskomponente V2 bezüglich der Drahtachse 13. Deren Geschwindigkeitsverlauf ist in Fig. 6 dargestellt und weiter erläutert. Eine Abwischvorrichtung 26 kann in einer Ruhelage 38 dem Draht entlang gezogen werden.

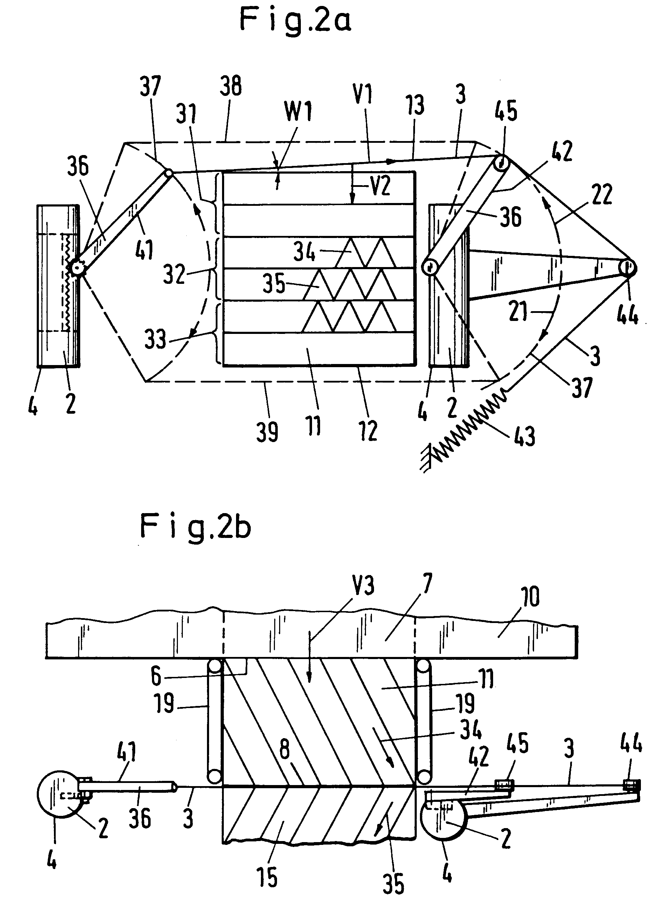

Fig. 2a, b zeigt von vorn und von oben ein weiteres Beispiel einer Schneidvorrichtung mit zwei Halbkreishebeln 41, 42, welche von zwei ebenfalls sehr schnellen Antrieben 2, z.B. in Form von Pneumatikzylindern mit Zahnstangen und Ritzeln als Uebertragung, betätigt werden. Der Schneiddraht 3 ist am einen Hebel 41 fixiert, am anderen Hebel 42 über eine Rolle 45 geführt und über eine feste Stützrolle 44 und eine Ausgleichsfeder 43 unter der notwendigen relativ hohen und gleichmässigen Spannung gehalten. Diese beträgt mit Vorteil meist mindestens 500 N/mm² Drahtquerschnitt. Um auch mit möglichst dünnen Drähten relativ hohe Zugkräfte aufbringen und damit hohe Schneidgeschwindigkeiten erreichen zu können, werden hochfeste Drahtmaterialien eingesetzt. Der Schneiddraht 3 berührt das Extrudat 11 anfangs punktförmig, d.h. mit einem kleinen Winkel W1 zur oberen Kante des rechteckigen Querschnitts 12, was einen günstigen Schnittansatz ergibt. Im ersten und im letzten Drittel 31, 33 der durchschnittenen Fläche 12 wird hier eine relativ grosse axiale Geschwindigkeitskomponente V1 erreicht, während diese im mittleren Drittel 32 kurz auf 0 zurückgeht (siehe Fig. 6). Wenn der erste Schnitt z.B. von oben nach unten in Richtung 21 erfolgt, kann der nächste Schnitt in Gegenrichtung 22, also von unten nach oben ausgeführt werden. Das Extrudat 11 wird hier nach dem Austritt vom unteren Transportband 18 und zwei seitlichen Transportbändern 19 mit V3 kontinuierlich weiter bewegt und gehalten. Aus Platzgründen ist hier die Schneidebene 8 von der Ausgangsfläche 6 des Extrusionsmundstücks 7 entfernt angeordnet. In Fig. 2b ist ein Hohlkörperextrudat mit sich kreuzenden offenen Kanälen dargestellt, bei dem die Kanäle abwechselnd schräg nach links (34) und nach rechts (35) verlaufend extrudiert werden. Der Schnitt 8 muss dann genau beim Wendepunkt der extrudierten Kanäle erfolgen, sodass jedes extrudierte Stück 15 nur gerade, parallele Kanäle aufweist. Dies ist z.B. in der WO 91/04141 beschrieben.

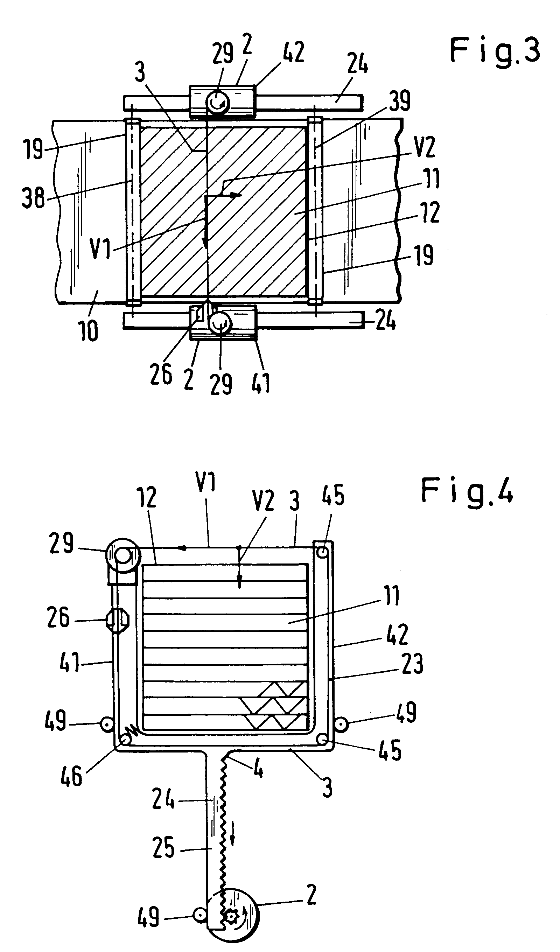

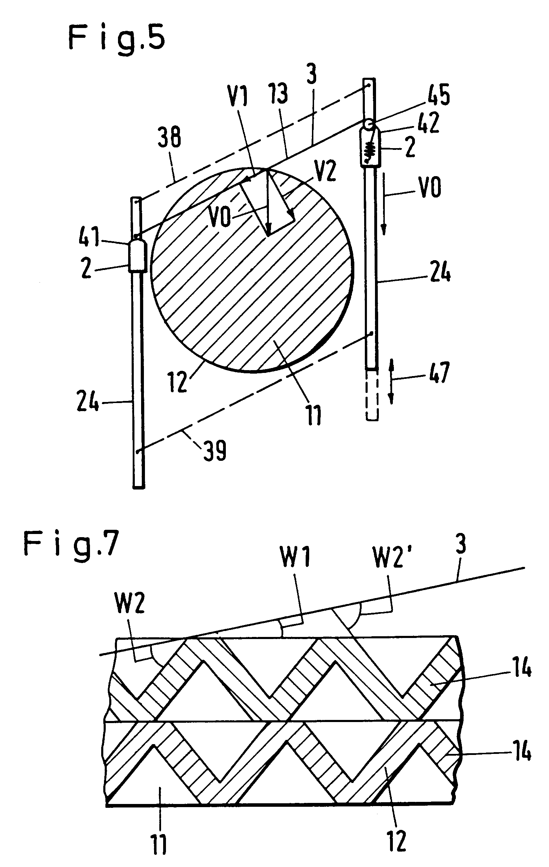

Um hohe Schnittgeschwindigkeiten zu erreichen, sind hochdynamische Antriebe eingesetzt, deren bewegte Teile sehr leicht gebaut sind. Dies sind z.B. Synchronmotoren, deren Rotoren leichte Permanentmagnete mit sehr hohe Feldstärken aufweisen, wie NdFeB, oder pneumatische Antriebselemente. Linearantriebe analoger Art, die beidseits sehr nahe am Extrudat 11 angeordnet sind, benötigen wenig Platz und ermöglichen sehr kurze, präzis führbare Schneiddrähte. Das Beispiel von Fig. 3 zeigt zwei Linearführungen 24 oberhalb und unterhalb des Extrudats 11 für die Halterungsteile 41, 42, welche den Draht in orthogonaler Richtung V2 bewegen. Die Drahtantriebe 29 ziehen den Draht unter vorgebbarer Spannung in axialer Richtung V1. Die bewegten Antriebe 29 sind als Ganzes leicht gebaut, wie auch alle bewegten Teile der Halterung 4, z.B. unter Verwendung von Leichtmettalen oder kohlefaserverstärkten Kunststoffen. Das Beispiel in Fig. 4 zeigt eine Schneidvorrichtung mit einem endlosen, umlaufenden Schneiddraht 23, welcher von einem Drahtantrieb 29 in Richtung V1 gezogen ist und über Umlenkrollen 45 und eine einstellbar gefederte Rolle 46 geführt ist. In Fig. 3 und 4 lässt sich auch einfach eine Abwischvorrichtung 26 für den Draht auf der Halterung 41 anbringen. Die einfache gabelförmige Halterung 4 mit den beiden Schenkeln 41, 42 wird von ihrem mittigen Stiel 25, z.B. mittels Ritzel und Zahnstange, vom Antrieb 2 mit Orthogonalgeschwindigkeit V2 bewegt und von den Rollen 49 geführt. Fig. 5 zeigt ein Beispiel mit rundem Extrudatquerschnitt 12 und Linearführungen 24 ohne Drahtzugmotor. Der Draht 3 ist einseitig an der Halterung 41 fest fixiert und auf der anderen Seite über die Umlenkrolle 45 und eine Feder elastisch gespannt und am Halterungsteil 42 fixiert. Die axiale und die orthogonale Drahtgeschwindigkeitskomponente V1 und V2 werden erzeugt durch Bewegen der Linearführung in Richtung V0 mit einem spitzen Winkel zur Drahtachse 13, welcher einstellbar ist durch Verschiebung 47 der einen Linearführung 24, 42. Die linear geführten Halterteile können z.B. durch Linearmotoren, mittels Draht und Rollen oder Spindeln angetrieben sein.

Die Figuren 6a, b, c zeigen den Verlauf der Geschwindigkeitskomponenten V1, V2 sowie von deren Verhältnis V1/V2 in Funktion der Zeit t während des Schneidens. Beginn und Ende des Schneidens erfolgen zu den Zeiten t1 bzw. t2, die Durchschneidezeit Dt beträgt t2 - t1. Eine Schneidvorrichtung nach Fig. 1 ergibt im wesentlichen sinusförmige Drahtgeschwindigkeitsverläufe. Die axiale Komponente V11 (t) nimmt von einem hohen Anfangswert bei t1 kontinuierlich ab auf einen einstellbaren Minimalwert V1m beit t2. Die orthogonale Komponente V21 (t) steigt umgekehrt von einem tiefen Wert beit t1 auf einen hohen Endwert bei t2. Eine Schneidvorrichtung nach Fig. 2 ergibt einen prinzipiell kosinusförmigen Verlauf V12 (t) der axialen Geschwindigkeitskomponente, welche relativ hoch ist im ersten und letzten Drittel des Schnitts mit einem Minimum 0 in der Mitte. Die orthogonale Komponente V22 (t) verläuft sinusförmig mit einem Maximum in der Mitte und mit geringen Anfangs- und Endgeschwindigkeiten beit t1 und t2, welche jedoch einen einstellbaren Minimalwert V2m nicht unterschreiten. Die Endwerte bei t1 und t2 sind in beiden Beispielen 1 und 2 so wählbar, dass das Verhältnis V1/V2 der Komponenten, wie die Kurven VV1 (t) und VV2 (t) zeigen, mindestens im ersten und im letzten Drittel des Schnittes ebenfalls über einen Minimalwert VVm von z.B. 0.2 liegen.

Mit Linearführungen gemäss den Beispielen der Figuren 3 bis 5 lassen sich im Prinzip beliebig wählbare und steuerbare Geschwindigkeitsverläufe der Komponenten V1 und V2 erzeugen. Besonders empfindliche dünnwandige Hohlkörperextrudate können vorzugsweise mit sehr dünnen Drähten und entsprechend hoher Zugspannung und hohen Geschwindigkeiten geschnitten werden. Diese wird begrenzt durch die maximal zulässige Drahtspannung. Mit Linearführungen können auch maximal mögliche Geschwindigkeiten über den ganzen Extrudatquerschnitt, d.h. von t1 bis t2, konstant eingehalten werden. Dies ergibt besonders präzise Schnitte und ermöglicht auch das Schneiden von dünnen Extrudatscheiben für spezielle Anwendungen.

Die Kurven V13, V23 und VV3 zeigen ein Beispiel mit konstanten Schnittgeschwindigkeiten.

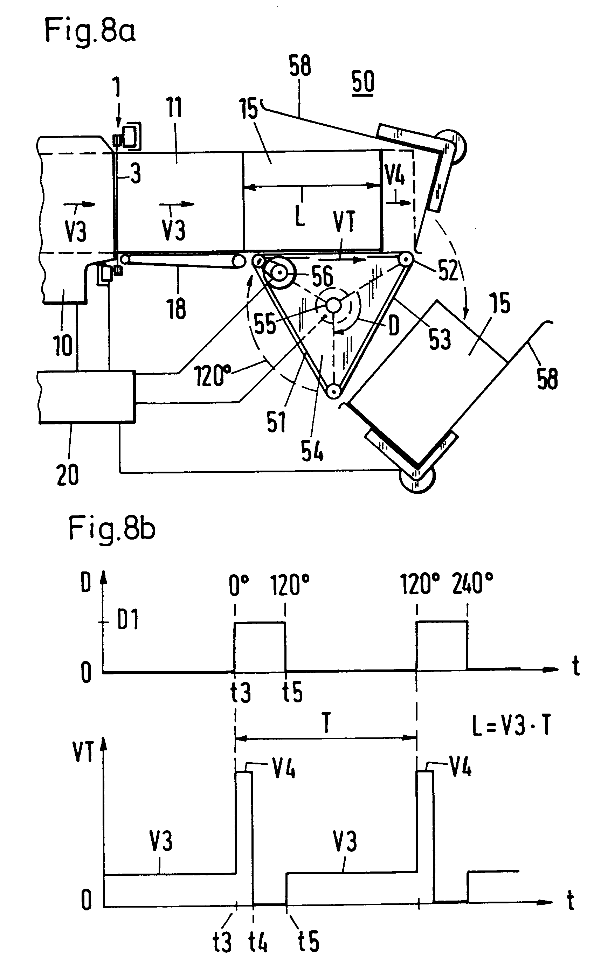

Fig. 7 zeigt die relative Lage des Schneiddrahtes 3 zu den Wänden 14 eines Hohlkörperextrudats 11. Für schonendes Schneiden wird der Draht 3 so eingestellt, dass dieser spitze Winkel W2, W2′ zu den Extrudatwänden 14 einnimmt.

Fig. 8a zeigt ein Beispiel mit einer zugeordneten, nachgeschalteten Transportvorrichtung 50 für die abgeschnittenen Extrudatkörper 15. Das Extrudat 11 tritt mit Extrusionsgeschwindigkeit V3 aus der Extrudieranlage 10 aus, wird von der Schneidvorrichtung 1 in Körper 15 der vorgegebenen Länge L geschnitten und vom Transportband 18 gleichförmig auf einen Dreieckstisch 51 weiterbewegt. Zur steuerbaren Weiterbewegung der Körper 15 weist der Dreieckstisch 51 ein umlaufendes Band 53 auf Rollen 52 auf, welche sich auf einem drehbaren Gestell 54 befinden. Das Band 53 wird vom Antrieb 56 bewegt und der Dreieckstisch 51 ist um seine Achse 55 drehbar gelagert. Eine Abnahmeschale 58 wird von oben an den vorgeschobenen Körper 15 herangeführt. Anschliessend wird die Abnahmeschale 58 mit Dreieckstisch und Körper 15 um 120° nach unten gedreht und der Körper 15 mit Schale 58 vom Dreieckstisch weggeführt. Für den nachfolgenden Extrusionskörper 15 ist auch der um 120° gedrehte Tisch 51 nun wieder aufnahmebereit. Die koordinierte zeitliche Steuerung der Antriebe von Extrusionsanlage 10, Schneidvorrichtung 1, Förderbändern 18 und 53, von Dreieckstisch 51 und Abnahmeschale 58 erfolgt über eine Steueranlage 20. Der zeitliche Verlauf mit Tischbandgeschwindigkeit VT (t) und Tischdrehgeschwindigkeit D (t) ist in Fig. 8b dargestellt. Zuerst wird der Körper 15 mit der Tischbandgeschwindigkeit VT = V3 bewegt. Im Zeitpunkt t3 wird er mit höherer Geschwindigkeit V4 bis ans Tischende vorgeschoben. Zum Zeitpunkt t4 berührt der Körper 15 das Abnahmeblech 58 und die Bandgeschwindigkeit VT beträgt 0 bis zum Zeitpunkt t5. In dieser Zeit t3 bis t5 ist auch der Tisch 51 mit Drehgeschwindigkeit D1 um 120° gedreht worden. Nach der Durchlaufzeit T des Körpers 15 mit L = V3 x T erfolgt der nächste Zyklus mit einer Tischdrehung von 120° bis 240°. Die Transportvorrichtung 50 könnte auch mit einem horizontalen Drehtisch oder einem Querband zum Wegführen der geschnittenen Körper 15 realisiert werden.

## Patentansprüche

1. Schneidvorrichtung (1) für eine Extrusionsanlage (10) mit einem Antrieb (2) und einem gespannten Schneiddraht (3) auf einer bewegbaren Halterung (4), mit welcher die Querschnittsfläche (12) des Extrudats (11) durch den Schneiddraht so überstreichbar ist, dass der Draht eine ziehende Bewegung ausführt, wobei der Draht mindestens im ersten (31) und im letzten Drittel (33) während des Durchschneidens des Extrudats eine axiale Geschwindigkeitskomponente V1 in Richtung seiner Achse (13) und eine dazu orthogonale Geschwindigkeitskomponente V2 aufweist,
dadurch gekennzeichnet, dass die Schneidfläche (8), die der Draht durchläuft, in unmittelbarer Nähe der Ausgangsfläche (6) des Extrusionsmundstücks (7) liegt und dass der Abstand des Schneiddrahts von der Ausgangsfläche des Extrusionsmundstücks höchstens 2 mm beträgt.

2. Schneidvorrichtung nach Anspruch 1, dadurch gekennzeichnet, dass die Dicke des Schneiddrahts (3) zwischen 0.05 und 0.5 mm liegt.

3. Schneidvorrichtung nach Anspruch 1 oder 2, dadurch gekennzeichnet, dass der Draht (3) aus hochfestem Material besteht wie Stahl, Aramid, Glasfasern oder LC-Polymeren.

4. Schneidvorrichtung nach einem der vorangehenden Ansprüche, dadurch gekennzeichnet, dass der Schneiddraht (3) aus mehreren Einzelfasern besteht.

5. Schneidvorrichtung nach einem der vorangehenden Ansprüche, dadurch gekennzeichnet, dass der Schneiddraht (3) beim Schneiden unter einer Spannung von mindestens 500 N/mm² gehalten ist.

6. Schneidvorrichtung nach einem der vorangehenden Ansprüche, dadurch gekennzeichnet, dass die orthogonale Geschwindigkeitskomponente V2 mindestens 50 mal grösser ist als die Extrusionsgeschwindigkeit V3.

7. Schneidvorrichtung nach einem der vorangehenden Ansprüche, dadurch gekennzeichnet, dass die Geschtwindigkeitskomponenten V1 und/oder V2 beim Schneiden zwischen 2 und 30 m/sec liegen.

8. Schneidvorrichtung nach einem der vorangehenden Ansprüche, dadurch gekennzeichnet, dass anfangs beim Berühren des Extrudats (11) die axiale Geschwindigkeitskomponente V1 mindestens 3 m/sec beträgt.

9. Schneidvorrichtung nach einem der vorangehenden Ansprüche, dadurch gekennzeichnet, dass das Verhältnis von axialer zu orthogonaler Geschwindigkeitskomponente V1/V2 mindestens im ersten (31) und im letzten Drittel (33) des Schnittes zwischen 0.2 und 5 liegt.

10. Schneidvorrichtung nach einem der vorangehenden Ansprüche, dadurch gekennzeichnet, dass der Schneiddraht (3) das Extrudat (11) bei Beginn des Schneidens Punktförmig berührt.

11. Schneidvorrichtung nach einem der vorangehenden Ansprüche, dadurch gekennzeichnet, dass der Schneiddraht (3) einen spitzen Winkel W2 zu den Wänden (14) eines Hohlkörperextrudats aufweist.

12. Schneidvorrichtung nach einem der vorangehenden Ansprüche, dadurch gekennzeichnet, dass der Schneiddraht alternierend bei jedem Schnitt einmal in einer Richtung (21) und darauffolgend in der Gegenrichtung (22) bewegt ist.

13. Schneidvorrichtnng nach einem der vorangehenden Ansprüche, dadurch gekennzeichnet, dass der Schneiddraht (3) eine geschlossene, in der Halterung (4) umlaufende Schlaufe (23) bildet.

14. Schneidvorrichtung nach einem der vorangehenden Ansprüche, gekennzeichnet durch eine Halterung (4), welche Linearführungen (24) aufweist.

15. Schneidvorrichtung nach einem der Ansprüche 1 bis 15, dadurch gekennzeichnet, dass der Schneiddraht (3) beidseits des Extrudats gehalten (41, 42), am einen Ende an der Halterung (4) fixiert, am anderen Ende elastisch eingespannt und mittels Drehhebeln (36) auf einem Kreisbogen (37) geführt ist.

16. Schneidvorrichtung nach einem der vorangehenden Ansprüche, gekennzeichnet durch eine zugeordnete Abwischvorrichtung (26), welche den Schneiddraht (3) periodisch überstreicht.

17. Schneidvorrichtung nach einem der vorangehenden Ansprüche, gekennzeichnet durch Förderbänder (18, 19), welche das Extrudat (11) kontinuierlich vorschieben und halten.

18. Schneidvorrichtung nach einem der vorangehenden Ansprüche, gekennzeichnet durch eine zugeordnete, nachgeschaltete Transportvorrichtung (50) für die abgeschnittenen Extrudatkörper (15) mit einem bewegbaren Tisch (51) und einer Abnahmeschale (58).

19. Schneidvorrichtung nach einem der vorangehenden Ansprüche, gekennzeichnet durch eine zugeordnete Steuereinrichtung (20), welche die Antriebe von Extrusionsanlage (10), Schneidvorrichtung (1), Förderbänder (18, 19) und allfälliger Transportvorrichtung (50) koordiniert.

20. Extrusionsanlage (10) mit einer Schneidvorrichtung (1) nach einem der Ansprüche 1 bis 21.

## Claims

1. Cutting device (1) for an extrusion unit (10) with a drive (2) and a tensioned cutting wire (3) on a mobile holder (4), by means of which the cutting wire can so sweep over the cross-sectional area (12) of the extruded article (11) that it executes a drawing movement, the wire having an axial velocity component V1 in the direction of its axis (13) and a velocity component V2 which is orthogonal with respect to the axial component, at least in the first (31) and in the last (33) third, while the extruded article is being severed, characterised in that the cutting face (8), through which the wire passes, lies in the immediate vicinity of the delivery face (6) of the extrusion die (7) and in that the distance of the cutting wire from the delivery face of the extrusion die is a maximum of 2 mm.

2. Cutting device according to claim 1, characterised in that the thickness of the cutting wire (3) is between 0.05 mm and 0.5 mm.

3. Cutting device according to claim 1 or 2, characterised in that the wire (3) consists of a high-strength material, such as steel, aramid, glass fibres or liquid-crystal polymers.

4. Cutting device according to one of the preceding claims, characterised in that the cutting wire (3) consists of a plurality of individual fibres.

5. Cutting device according to one of the preceding claims, characterised in that the cutting wire (3) is held at a tension of at least 500 N/mm² during cutting.

6. Cutting device according to one of the preceding claims, characterised in that the orthogonal velocity component V2 is at least 50 times greater than the extrusion velocity V3.

7. Cutting device according to one of the preceding claims, characterised in that the velocity component(s) V1 and/or V2 lie(s) between 2 and 30 m/sec. during cutting.

8. Cutting device according to one of the preceding claims, characterised in that the axial velocity component V1 is initially at least 3 m/sec. upon contacting the extruded article (11).

9. Cutting device according to one of the preceding claims, characterised in that the ratio V1/V2 of the axial to the orthogonal velocity component lies between 0.2 and 5, at least in the first (31) and in the last (33) third of the cut.

10. Cutting device according to one of the preceding claims, characterised in that the cutting wire (3) contacts the extruded article (11) at a point at the beginning of the cutting operation.

11. Cutting device according to one of the preceding claims, characterised in that the cutting wire (3) forms an acute angle W2 with the walls (14) of a hollow extruded article.

12. Cutting device according to one of the preceding claims, characterised in that the cutting wire is moved alternately in one direction (21) and then in the opposite direction (22) each time a cut is made.

13. Cutting device according to one of the preceding claims, characterised in that the cutting wire (3) forms a closed loop (23) which passes round the inside of the holder (4).

14. Cutting device according to one of the preceding claims, characterised by a holder (4) which comprises linear guides (24).

15. Cutting device according to one of claims 1 to 15, characterised in that the cutting wire (3) is held on both sides (41, 42) of the extruded article, fixed at one end to the holder (4), elastically constrained at the other end and guided along a circular arc (37) by means of rotating levers (36).

16. Cutting device according to one of the preceding claims, characterised by an associated wiping device (26), which sweeps over the cutting wire (3) at regular intervals.

17. Cutting device according to one of the preceding claims, characterised by conveyor belts (18, 19), which continuously advance and hold the extruded article (11).

18. Cutting device according to one of the preceding claims, characterised by an associated, subsequent conveyor device (50), which comprises a mobile table (51) and a take-up dish (58), for the severed extruded pieces (15).

19. Cutting device according to one of the preceding claims, characterised by an associated control device (20), which coordinates the drives of the extrusion unit (10), the cutting device (1), the conveyor belts (18, 19) and any conveyor device (50) which may be provided.

20. Extrusion unit (10) with a cutting device (1) according to one of claims 1 to 21.

## Revendications

1. Dispositif de coupe (1) pour une extrudeuse (10), équipé d'un entraînement (2) et d'un fil de découpage (3) tendu, sur une fixation (4) déplaçable, à l'aide duquel la surface (12) de section transversale de l'extrudat (11) peut être parcourue par le fil de découpage, de manière que le fil effectue un mouvement d'étirement oblique, le fil présentant au moins dans un premier (31) et dans un dernier tiers (33) pendant le découpage de l'extrudat une composante de vitesse axiale V1 orientée dans la direction de son axe (13) et une composante de vitesse V2, orthogonale par rapport à celle-ci, caractérisé en ce que la surface de découpage (8) que parcourt le fil est située à proximité immédiate de la surface de sortie (6) de la pièce d'embouchure d'extrusion (7), et en ce que l'espacement entre le fil de découpage et la surface initiale de la pièce d'embouchure d'extrusion est au maximum de 2 mm.

2. Dispositif de coupe selon la revendication 1, caractérisé en ce que l'épaisseur du fil de découpage (3) est située dans la plage comprise entre 0,05 et 0,5 mm.

3. Dispositif de coupe selon la revendication 1 ou 2, caractérisé en ce que le fil (3) est en un matériau très résistant, tel que de l'acier, de l'aramide, des fibres de verre ou des polymères LC.

4. Dispositif de coupe selon l'une des revendications précédentes, caractérisé en ce que le fil de découpage (3) est constitué de plusieurs fibres individuelles.

5. Dispositif de coupe selon l'une des revendications précédentes, caractérisé en ce que le fil de coupe (3) est maintenu lors de la coupe sous une contrainte de traction d'au moins 500 N/mm².

6. Dispositif de coupe selon l'une des revendications précédentes, caractérisé en ce que la composante de vitesse V2 orthogonale est au moins 50 fois plus grande que la vitesse d'extrusion V3.

7. Dispositif de coupe selon l'une des revendications précédentes, caractérisé en ce que la composante de vitesse V1 et/ou la composante de vitesse V2 sont comprises entre 2 et 30 m/sec lors de la coupe.

8. Dispositif de coupe selon l'une des revendications précédentes, caractérisé en ce que, initialement, lors de la mise en contact de l'extrudat (11), la composante axiale de vitesse V1 est d'au moins 3 m/sec.

9. Dispositif de coupe selon l'une des revendications précédentes, caractérisé en ce que le rapport entre la composante de vitesse axiale et la composante de vitesse orthogonale, V1/V2, au moins dans le premier (31) et dans le dernier (33) tiers de la coupe, est compris entre 0,2 et 5.

10. Dispositif de coupe selon l'une des revendications précédentes, caractérisé en ce que le fil de coupe (3) entre en contact avec l'extrudat (11) de façon ponctuelle au début de la coupe.

11. Dispositif de coupe selon l'une des revendications précédentes, caractérisé en ce que le fil de coupe (3) présente un angle W2 aigu par rapport aux parois (14) d'un extrudat à corps creux.

12. Dispositif de coupe selon l'une des revendications précédentes, caractérisé en ce que le fil de coupe est déplacé alternativement à chaque coupe, d'abord dans une première direction (21) et ensuite dans la direction opposée (22).

13. Dispositif de coupe selon l'une des revendications précédentes, caractérisé en ce que le fil de coupe (3) constitue une boucle (3) fermée, circulant dans la fixation (4).

14. Dispositif de coupe selon l'une des revendications précédentes, caractérisé par une fixation (4) qui présente des guidages linéaires (24).

15. Dispositif de coupe selon l'une des revendications 1 à 15, caractérisé en ce que le fil de coupe (3) est maintenu de part et d'autre de l'extrudat (41, 42), en étant fixé à une extrémité sur la fixation (4), en étant enserré à l'autre extrémité de façon élastique et guidé sur un arc de cercle (37) au moyen de leviers tournants (36).

16. Dispositif de coupe selon l'une des revendications précédentes, caractérisé par un dispositif d'essuyage (27) associé, qui balaie périodiquement le fil de coupe (3).

17. Dispositif de coupe selon l'une des revendications précédentes, caractérisé par des bandes transporteuses (18, 19) qui assurent une progression continue et un maintien de l'extrudat (11).

18. Dispositif de coupe selon l'une des revendications précédentes, caractérisé par un dispositif transporteur (50) associé, mis en circuit en aval, pour les corps d'extrudat (15) découpés, avec une table (51) déplaçable et une coquille de réception-dépose (58).

19. Dispositif de coupe selon l'une des revendications précédentes, caractérisé par un dispositif de commande (20) associé qui coordonne les entraînements de l'extrudeuse (10), du dispositif de coupe (1), des bandes transporteuses (18, 19) et de l'éventuel dispositif transporteur (50).

20. Extrudeuse (10) comportant un dispositif de coupe (1) réalisé selon l'une des revendications 1 à 19.
